# EUROPÄISCHE PATENTANMELDUNG

(11) **EP 2 366 979 A1**
(43) Veröffentlichungstag der Anmeldung: **21.09.2011**
(21) Anmeldenummer: 10014013.6
(22) Anmeldetag: 26.10.2010
(51) Int. Cl.: G01F 1/66

(54) **Vorrichtung und Verfahren zur Messung des Durchflusses eines durch ein Rohr strömenden Fluids**

(30) Priorität: 18.12.2009 DE 102009059710
(71) Anmelder: Open Grid Europe GmbH, 45141 Essen (DE)
(72) Erfinder: Krajcin, Idriz, Dr.-Ing., 46145 Oberhausen (DE); Uhrig, Martin, Dr., 45889 Gelsenkirchen (DE)
(74) Vertreter: Harlacher, Mechthild

(57) **Zusammenfassung**

Die Erfindung betrifft eine Vorrichtung und ein Verfahren zur Messung des Durchflusses eines durch ein Rohr strömenden Fluids, insbesondere eines Gases, mit einem rohrförmigen Messgehäuse (1), in dem mindestens zwei Ultraschallmesswandlern (5a, 5b) angeordnet sind, die paarweise in Strömungsrichtung mit Abstand zueinander derart angeordnet sind, dass Ultraschall im Strömungsweg des Fluides entlang eines ersten Ultraschallpfades (6) geleitet wird, dass die Laufzeit des Ultraschalls gemessen und dass aus den Messwerten in einer Auswerteeinheit (8a, 8b) ein erster Durchflusswert berechnet wird.

Erfindungsgemäß ist im Messgehäuse (1) konzentrisch ein zylindrischer Verdrängungskörper (2) angeordnet, so dass ein ringförmiger Strömungskanal (4) für das Fluid gebildet wird, in dem der erste Ultraschallpfad (6) verläuft.

## Beschreibung

Die Erfindung betrifft eine Vorrichtung und ein Verfahren zur Messung des Durchflusses eines durch ein Rohr strömenden Fluides, insbesondere eines Gases, mit einem rohrförmigen Messgehäuse, in dem mindestens zwei Ultraschallmesswandler angeordnet sind, die paarweise in Strömungsrichtung mit Abstand zueinander derart angeordnet sind, dass Ultraschall im Strömungsweg des Fluides entlang eines ersten Ultraschallpfades geleitet wird, dass die Laufzeit des Ultraschalls gemessen und dass aus den Messwerten in einer Auswerteeinheit ein erster Durchflusswert berechnet wird.

Bei dem Fluid kann es sich um eine beliebige Flüssigkeit oder ein beliebiges Gas handeln. Ein wichtiges Anwendungsgebiet ist die Durchflussmessung von Erdgas für betriebliche Zwecke oder im eichpflichtigen Verkehr.

Die Durchflussmessung mittels Ultraschallmesswandlern ist bekannt. Ultraschall wird von einem Ultraschallmesswandler mit und gegen die Strömung ausgesandt und die jeweilige Laufzeit ermittelt. In einer außerhalb des Messgehäuses befindlichen Auswerteinheit werden aus den Laufzeitdifferenzen die Strömungsgeschwindigkeit und daraus der Durchfluss des Fluides bestimmt.

In Erdgasleitungen können durch Vorstörung, verursacht durch Rohrbögen und dergleichen in der Einlaufstreckc zu der Vorrichtung zur Durchflussmessung zum Teil erhebliche Messfehler entstehen.

Hinzu kommt, dass es im Zuge der Liberalisierung des Gasmarktes im zunehmenden Maße erforderlich ist, die Transportrichtung bzw. die Strömungsrichtung des Gases zu wechseln. Daher sind Vorrichtungen zur Messung des Durchflusses erforderlich, die universell, insbesondere bidirektional einsetzbar sind.

Der Erfindung liegt daher die Aufgabe zu Grunde, eine universell einsetzbare Vorrichtung und ein Verfahren zur Messung des Durchflusses eines durch ein Rohr strömenden Fluides zu schaffen, insbesondere zur Messung mit hoher Messgenauigkeit und unabhängig von Strömungsvorstörungen.

Zur Lösung dieser Aufgabe ist die Vorrichtung der eingangs genannten Art dadurch gekennzeichnet, dass im Messgehäuse konzentrisch ein zylindrischer Verdrängungskörper angeordnet ist, so dass ein ringförmiger Strömungskanal für das Fluid gebildet wird, in dem der erste Ultraschallpfad verläuft.

Der Verdrängungskörper bildet zusammen mit der Innenwand des Messgehäuses einen im Querschnitt ringförmigen Strömungskanal für das Fluid. Die Verengung des Strömungsweges führt zu einer Homogenisierung der Strömung, so dass sich die Messgenauigkeit und die Unempfindlichkeit gegenüber Strömungsvorstörungen verbessert.

Vorzugsweise verläuft der erste Ultraschallpfad im Strömungskanal in Strömungsrichtung unter einem Winkel zu der Längsachse des Messgehäuses. Ultraschall wird von einem stromaufwärts gelegenen ersten Ultraschallwandler ausgesandt und erreicht den in Strömungsrichtung beabstandeten Ultraschallwandler schneller als der in Gegenrichtung ausgesandte Ultraschall, der sich gegen das strömende Fluid ausbreitet. Aus der Differenz der Laufzeiten auf dem ersten Schallweg kann in der Auswerteeinheit die Strömungsgeschwindigkeit des Fluides und daraus der Durchfluss ermittelt werden.

Bei einer bevorzugten Ausführungsform sind in dem ringförmigen Strömungskanal mindestens zwei weitere Ultraschallmesswandler angeordnet, die paarweise in Strömungsrichtung mit Abstand zueinander derart angeordnet sind, dass Ultraschall im Strömungsweg des Fluides entlang eines zweiten Ultraschallpfades geleitet wird. Zwischen den Ultraschallmesswandlern, in radialer Richtung von diesen beabstandet, befindet sich eine Reflexionsfläche für den Ultraschall, so dass der zweiten Ultraschallpfad V-förmig verläuft. Dadurch kann neben der Messung des Durchflusses am Rand des Rohres auch der Durchfluss, in dessen Mitte erfasst werden. Reflektierende Schallpfade sind zudem unempfindlicher gegenüber Querströmungskomponenten.

Vorzugsweise verlaufen im ringförmigen Strömungskanal weitere Ultraschallpfade, spiegelbildlich zu dem ersten und dem zweiten Ultraschallpfad. Eine Spiegelung kann an einer oder mehreren Spiegelebenen stattfinden. Eine Spiegelebene kann durch die Achse des Messgehäuses verlaufen. Mehrere Ultraschallpfade sind in der Lage, ein Strömungsbild besser abzubilden, so dass sich die Messgenauigkeit und die Unempfindlichkeit gegenüber Strömungsvorstörungen verbessert.

Nach einem vorteilhaften Merkmal der Erfindung sind die Ultraschallmesswandler an der Innenwand des Messgehäuses angeordnet. Zur Bildung des V-förmigen zweiten Ultraschallweges ist die Reflektionsfläche auf dem Verdrängungskörper ausgebildet.

Eine wesentliche Weiterbildung der Erfindung besteht darin, dass sich im Messgehäuse ein drehbar gelagertes Turbinenrad befindet, welches sich über den Querschnitt des ringförmigen Strömungskanals erstreckt und von dem strömenden Fluid angetrieben wird, wobei Impulse erzeugt werden, aus denen in der Auswerteeinheit ein zweiter Durchflusswert ermittelt wird.

Bisher werden Messanlagen für die Durchflussmessung von Erdgas häufig mit einem ein Turbinenrad-Messgerät und mit einem separaten Ultraschall-Durchflussmessgerät ausgerüstet. Die Erfindung bietet den großen Vorteil, dass die zwei verschiedenen Messprinzipien in einem Messgehäuse realisiert sind. Durch die Kombination beider physikalischer Messprinzipien in einem Gehäuse lassen sich platzsparende und zuverlässige Zähler konstruieren, die eine erhöhte Messgenauigkeit haben.

Die Auswerteeinheit beinhaltet ein mechanisches Zählwerk, welches mit dem Turbinenrad gekoppelt ist. Die Auswerteeinheit kann aus zwei getrennten Auswertemodulen gebildet werden, die flexibel ausgestaltet werden können. In einem ersten Auswertemodul können die Durchflussmesswerte auf Basis der Ultraschallmesswerte berechnet werden. Unabhängig davon können im zweiten Auswertemodul die Impulse bzw. die Signale des Turbinenrades ausgewertet werden. Das zweite Auswertemodul kann ein mechanisches Zählwerk aufweisen. Beide Auswertemodule können miteinander verbunden sein und sich gegenseitig überwachen und und/oder jeweils einen Mittelwert aus beiden Zählern ermitteln und ausgeben.

Nach dem Eichgesetz kann die Eichgültigkeit durch den Einsatz von zwei Zählern mit unterschiedlichen physikalischen Messprinzipien bei jährlicher Überwachung und Einhaltung bestimmter Grenzwerte unbeschränkt verlängert werden. Die hier vorgestellt Kombination beinhaltet zwei physikalisch unterschiedliche Messprinzipien, die sich auch unabhängig überwachen können. Somit könnte mit diesem System eine unbeschränkte Eichgültigkeit bei Erfüllung bestimmter Auflagen und Grenzwerte angestrebt werden.

Im Zuge der Liberalisierung des Gasmarktes ist es im zunehmenden Maße erforderlich, die Transportrichtung bzw. die Strömungsrichtung des Gases zu wechseln. Daher sind bidirektionale Vorrichtungen zur Messung des Durchflusses erforderlich. Der Zähler kann als unidirektionaler Zähler und alternativ als bidirektionaler Zähler ausgebildet und eingesetzt werden. Eine wesentliche Weiterbildung der Vorrichtung nach der Erfindung besteht darin, dass das Messgehäuse von dem Fluid in beide Richtungen durchströmbar ist und dass sich stromaufwärts und stromabwärts des Turbinenrades spiegelbildlich angeordnete Ultraschallmesswandler befinden.

Das Turbinenrad bildet eine Spiegelebene für die ersten und zweiten Ultraschallpfade.

Nach einem weiteren vorteilhaften Merkmal der Erfindung wird der Verdrängungskörper im Messgehäuse mittels mindestens einer Halterung gehalten. Vorzugsweise werden an jedem Ende des Verdrängungskörpers mindestens eine Halterungen vorgesehen.

Vorzugsweise befindet sich in der Halterung mindestens eine Tasche zur Aufnahme eines Temperaturfühlers, welcher von außen durch eine Bohrung im Messgehäuse in die Tasche einsteckbar ist. In Weiterbildung der Erfindung befindet sich in der Halterung mindestens eine weitere Tasche zur Einführung z. B. eines Temperaturfühlers zur Kontrolle.

Eine vorteilhafte Ausgestaltung besteht darin, dass an beiden Enden des Messgehäuses je ein Strömungsgleichrichter angeordnet ist.

Die Erfindung schafft ferner ein Verfahren zur Messung des Durchflusses eines durch ein Rohr strömenden Fluides, insbesondere eines Gases mit einem rohrförmigen

Messgehäuse, wobei Ultraschall mittels mindestens eines Paares von Ultraschallmesswandlern die in Strömungsrichtung mit Abstand zueinander derart angeordnet sind, dass Ultraschall entlang eines ersten Ultraschallpfades geleitet wird und wobei in einer Auswerteelektronik aus einer Laufzeitmessung des Ultraschalls ein Durchflusswert berechnet wird, dadurch gekennzeichnet, dass im Messgehäuse mittels eines zylindrischen Verdrängungskörpers ein ringförmiger Strömungsweg für das Fluid ausgebildet wird und dass mittels eines im Messgehäuse drehbar gelagerten Turbinenrades, welches sich im Strömungsweg für das Fluid erstreckt und von dem strömenden Fluid angetrieben wird, Impulse erzeugt werden, aus denen ein zweiter Durchflusswert ermittelt wird.

Der erste und der zweite Durchflusswert können separat angezeigt oder weiter verarbeitet werden. Im Rahmen der Erfindung kann auch der Durchschnittswert des ersten und des zweiten Durchflusswertes ermittelt werden.

Die Erfindung wird im Folgenden anhand eines bevorzugten Ausführungsbeispiels der erfindungsgemäßen Vorrichtung im Zusammenhang mit der Zeichnung näher erläutert.

Die Zeichnung zeigt in:
- Fig. 1: einen schematisiert dargestellten Längsschnitt durch eine Vorrichtung zur Messung des Durchflusses;
- Fig. 2: die Vorderansicht der Vorrichtung nach Fig. 1;
- Fig. 3: eine Draufsicht der Vorrichtung nach Fig. 1.

Bei der dargestellten Vorrichtung zur Durchflussmessung handelt es sich um einen Gaszähler für Erdgas unter hohem Druck, insbesondere für den Einsatz in einem Ferngasleitungsnetz für Erdgas.

In einem druckfesten rohrförmigen Messgehäuse 1 befindet sich konzentrisch ein Verdrängungskörper 2, der an jedem Ende von je einer Halterung 3a und 3b gehalten wird.

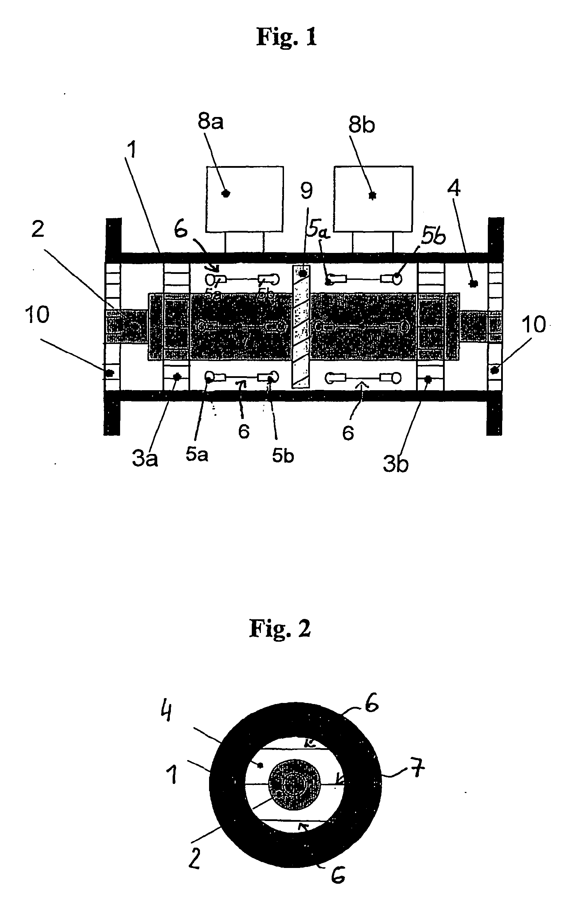

Fig. 2 ist zu entnehmen, dass sich zwischen der Innenwand des Messgehäuses 1 und dem Verdrängungskörper 2 ein ringförmiger Strömungskanal 4 bildet, der von dem Fluid, hier Erdgas, durchströmt wird. Im ringförmigen Strömungskanal 4 sind mehrere Ultraschallmesswandler 5a, 5b paarweise angeordnet. Ein Paar aus Ultraschallmesswandlern 5a, 5b werden gleichzeitig als Sender und Empfänger eingesetzt und bilden einen ersten Ultraschallpfad 6. Die Laufzeiten des Ultraschalls mit und entgegen der Strömungsrichtung werden gemessen. In einem Auswertemodul 8a (Fig. 1) werden in bekannter Art und Weise aus den Laufzeitdifferenzen die Strömungsgeschwindigkeit und daraus der Durchfluss ermittelt.

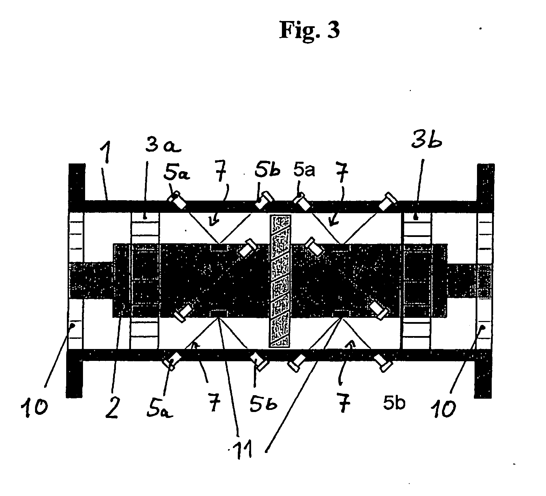

In Fig. 3 ist dargestellt, dass der erste Ultraschallpfad 6 unter einem Winkel zu der Längsachse des Messgehäuses 1 verläuft. Es handelt sich um einen direktstrahlenden Ultraschallpfad. Ein zweiter V-förmiger Ultraschallpfad 7 wird einmal an einer Reflexionsfläche 11 an dem Verdrängungskörper reflektiert. Der erste und der zweite Ultraschallpfad 6, 7 werden an der Längsachse gespiegelt und bilden somit zusätzliche Messpfade.

Fig. 1 und Fig. 3 ist zu entnehmen, dass sich im Messgehäuse ein drehbar gelagertes Turbinenrad 9 befindet, welches sich über den Querschnitt des ringförmigen Strömungskanals 4 erstreckt. Das Turbinenrad 9 wird von dem strömenden Fluid angetrieben, wobei Impulse erzeugt werden, aus denen in einem Auswertemodul 8b (Fig. 1) ein zweiter Durchflusswert ermittelt wird.

Es werden zwei einzelne Durchflüsse, die dazu dienen, sich gegenseitig zu überwachen und/oder ein Mittelwert aus beiden Durchflüssen in den Auswertemodulen 8a und 8b ermittelt.

Das Messgehäuse 1 kann von dem Erdgas in beide Richtungen durchströmt werden. Auf beiden Seiten des Turbinenrades 9 befinden sich ähnlich angeordnete Paare von Ultraschallmesswandlern 5a, 5b, die beispielsweise auch um die Längsachse verdreht sein können.

In jeder der beiden Halterungen 3a und 3b befinden sich zwei nicht dargestellte Taschen zur Aufnahme von Temperaturfühlern, die von außen durch eine nicht dargestellte Bohrung im Messgehäuse 1 in die Taschen einsteckbar sind.

An beiden Enden des Messgehäuses 1 ist je ein an sich bekannter Strömungsgleichrichter 10 angeordnet, der die Strömung in beide Strömungsrichtungen weiter vergleichmäßigt. Das Messgehäuse 1 ist mit einer nicht dargestellten Druckentnahmestelle versehen.

Im Rahmen der Erfindung sind ohne weiteres Abwandlungsmöglichkeiten gegeben. So können die Ultraschallpfade 6, 7 mehrfach gespiegelt werden und um die Längsachse verdreht sein. In einer der beiden Halterungen 3a und 3b können auch mehrere Taschen zur Aufnahme von Temperaturfühlern vorgesehen werden. Das Messgehäuse 1 kann mit zwei oder mehr Druckentnahmestellen ausgerüstet werden. Die Halterung 3 kann gleichzeitig als Gleichrichter ausgebildet sein.

## Patentansprüche

1. Vorrichtung zur Messung des Durchflusses eines durch ein Rohr strömenden Fluids, insbesondere eines Gases, mit einem rohrförmigen Messgehäuse (1), in dem mindestens zwei Ultraschallmesswandlern (5a, 5b) angeordnet sind, die paarweise in Strömungsrichtung mit Abstand zueinander derart angeordnet sind, dass Ultraschall im Strömungsweg des Fluides entlang eines ersten Ultraschallpfades (6) geleitet wird, dass die Laufzeit des Ultraschalls gemessen und dass aus den Messwerten in einer Auswerteeinheit (8a, 8b) ein erster Durchflusswert berechnet wird,
**dadurch gekennzeichnet,**
**dass** im Messgehäuse (1) konzentrisch ein zylindrischer Verdrängungskörper (2) angeordnet ist, so dass ein ringförmiger Strömungskanal (4) für das Fluid gebildet wird, in dem der erste Ultraschallpfad (6) verläuft.

2. Vorrichtung nach Anspruch 1,
**dadurch gekennzeichnet, dass** der erste Ultraschallpfad (6) im Strömungskanal in Strömungsrichtung unter einem Winkel zu der Längsachse des Messgehäuses (1) verläuft.

3. Vorrichtung nach einem der Ansprüche 1 oder 2,
**dadurch gekennzeichnet, dass** in dem ringförmigen Strömungskanal (4) mindestens zwei weitere Ultraschallmesswandler (5a, 5b) angeordnet sind, die paarweise in Strömungsrichtung mit Abstand zueinander derart angeordnet sind, dass Ultraschall im Strömungsweg des Fluides entlang eines zweiten Ultraschallpfades (7) geleitet wird, dass sich zwischen den Ultraschallmesswandlern (5a, 5b), in radialer Richtung von diesen beabstandet, eine Reflexionsfläche (11) für den Ultraschall befindet, so dass der zweiten Ultraschallpfad (7) V-förmig verläuft.

4. Vorrichtung nach einem der Ansprüche 1 bis 3,
**dadurch gekennzeichnet, dass** im ringförmigen Strömungskanal (4) weitere Ultraschallpfade (6, 7) spiegelbildlich zu dem ersten und dem zweiten Ultraschallpfad (6, 7), verlaufen.

5. Vorrichtung nach einem der Ansprüche 1 bis 4,
**dadurch gekennzeichnet, dass** die Ultraschallmesswandler (5a, 5b) an der Innenwand des Messgehäuses (1) angeordnet sind.

6. Vorrichtung nach einem der Ansprüche 1 bis 5,
**dadurch gekennzeichnet, dass** sich im Messgehäuse (1) ein drehbar gelagertes Turbinenrad (9) befindet, welches sich über den Querschnitt des ringförmigen Strömungskanals (4) erstreckt und von dem strömenden Fluid angetrieben wird, wobei Impulse erzeugt werden, aus denen in der Auswerteeinheit (8a, 8b) ein zweiter Durchflusswert ermittelt wird.

7. Vorrichtung nach einem der Ansprüche 1 bis 6,
**dadurch gekennzeichnet, dass** das Messgehäuse (1) von dem Fluid in beide Richtungen durchströmbar ist und dass sich stromaufwärts und stromabwärts des Turbinenrades (9) spiegelbildlich angeordnete Ultraschallmesswandler (5a, 5b) befinden.

8. Vorrichtung nach einem der Ansprüche 1 bis 7,
**dadurch gekennzeichnet, dass** der Verdrängungskörper (2) im Messgehäuse (1) mittels mindestens einer Halterung (3a, 3b) gehalten wird.

9. Vorrichtung nach Anspruch 8,
**dadurch gekennzeichnet, dass** sich in der Halterung (3a, 3b) mindestens eine Tasche zur Aufnahme eines Temperaturfühlers befindet, der von außen durch eine Bohrung im Messgehäuse (1) in die Tasche einsteckbar ist.

10. Vorrichtung nach einem der Anspruch 1 bis 9,
**dadurch gekennzeichnet, dass** an beiden Enden des Messgehäuses (1) ein Strömungsgleichrichter (10) angeordnet ist.

11. Verfahren zur Messung des Durchflusses eines durch ein Rohr strömenden Fluides, insbesondere eines Gases, mit einem rohrförmigen Messgehäuse (I), wobei Ultraschall mittels mindestens zwei Ultraschallmesswandlern (5a, 5b), die paarweise in Strömungsrichtung mit Abstand zueinander derart angeordnet sind, dass Ultraschall im Strömungsweg des Fluides entlang eines ersten Ultraschallpfades (6) geleitet wird und dass aus einer Laufzeitmessung des Ultraschalls ein erster Durchflusswert berechnet wird,
**dadurch gekennzeichnet,**
**dass** im Messgehäuse (1) mittels eines zylindrischen Verdrängungskörpers (2) ein ringförmiger Strömungsweg (4) für das Fluid ausgebildet wird und dass mittels eines im Messgehäuse (1) drehbar gelagerten Turbinenrades (9), welches sich im Strömungsweg (4) für das Fluid erstreckt und von dem strömenden Fluid angetrieben wird, Impulse erzeugt werden, aus denen ein zweiter Durchflusswert ermittelt wird.

12. Verfahren nach Anspruch 11,
**dadurch gekennzeichnet,**
**dass** ein Durchschnittswert aus dem ersten und dem zweiten Durchflusswert gebildet wird.
